# EUROPEAN PATENT APPLICATION

(11) **EP 4 383 952 A1**
(43) Date of publication of application: **12.06.2024**
(21) Application number: 23187525.3
(22) Date of filing: 25.07.2023
(51) Int. Cl.: H05B 47/24, H05B 47/18

(54) **DIMMING INTERFACE CONTROL CIRCUIT COMPATIBLE WITH MULTIPLE DIMMING MODES AND DIMMING SYSTEM**

(30) Priority: 12.12.2022 CN 202211596887
(71) Applicant: Shanghai Bright Power Semiconductor Co., Ltd., Shanghai 201206 (CN)
(72) Inventor: ZHANG, Shunfa, Shanghai, 201206 (CN); FAN, Minmin, Shanghai, 201206 (CN); WANG, Peng, Shanghai, 201206 (CN)
(74) Representative: Nordmeyer, Philipp Werner

(57) **Abstract**

A dimming interface control circuit compatible with multiple dimming modes and a dimming system are disclosed. The dimming interface control circuit is coupled to both a DALI bus and a DALI control gear, includes a first power supply module, a transmission control module, a reception control module and a push-button dimming control module and is compatible with both DALI dimming and push-button dimming modes. Associated peripheral circuitry for the dimming interface control circuit can be simplified to be more consistent and include fewer peripheral components, compared to existing interface circuits consisting of standalone components. Additionally, signal path(s) in the transmission control module and/or reception control module may be switched on and off using MOS transistor(s), resulting in higher accuracy, less susceptibility to temperature drifts and better consistency. Further, apart from transmission of a push-button dimming signal, an overvoltage protection circuit may be integrated in the push-button dimming control module to impart overvoltage protection ability to the chip, which enables the chip to withstand high voltage required by push-button dimming.

## Description

### TECHNICAL FIELD

The present invention relates to the field of intelligent lighting control technology and, in particular, to a dimming interface control circuit compatible with multiple dimming modes and a dimming system.

### BACKGROUND

Digital addressable lighting interface (DALI) is a lighting standard defined by IEC62386. A single DALI bus allows the access of up to 64 control devices and 64 DALI control gears. DALI control gears are controlled lighting devices, such as LED luminaires, relays, microcontroller units (MCUs) for receipt of control commands and direct control of luminaires, etc. Control devices are application controllers and input devices that issue control commands or generate trigger events, such as DALI switches, DALI knobs, DALI sensors, etc.

DALI buses not only power the connected DALI control gears and control devices, but also communicate signals between them. DALI buses allow a power current of up to 250 mA. As a wired intelligent lighting technique, the most unique characteristic of DALI is independent addressing of each single luminaire. A single lamp or a group of multiple lamps in the same or different high-current circuits can be separately addressed, enabling individual and group dimming control. Therefore, DALI dimming presents great flexibility in lighting control. A user is even allowed to make desired functional adjustments during operation following installation, without any modification to the wiring. Thus, this technique has been widely used in large venues and commercial and office lighting control systems.

In order to enable transmission and reception of signals, a DALI control gear is connected to a DALI bus via an interface circuit and thus communicated with a control device. At present, the interface circuit is generally implemented by a standalone component such as a triode, and both constant-current and current-limiting functions rely on detecting a voltage across a resistor through a base-emitter voltage difference VBE of the triode. However, this approach is disadvantageous in low accuracy, high susceptibility to temperature drifts, complicated peripheral circuitry, poor consistency and high cost. Similarly, overvoltage protection generally relies on the use of a Zener diode and the detection of a partial voltage on a resistor through a triode's VBE. Therefore, it also suffers from the problem of low accuracy and high susceptibility to temperature drifts.

### SUMMARY OF THE INVENTION

It is an objective of the present invention to provide a dimming interface control circuit compatible with multiple dimming modes, in particular, DALI dimming and push-button dimming modes, and a dimming system, which provide a simplified peripheral circuitry design, improved consistency and high voltage resistance required by push-button dimming.

To this end, the present invention provides a dimming interface control circuit compatible with multiple dimming modes, including:
a transmission control module coupled to both a DALI bus and a DALI control gear, the transmission control module configured to feed a signal transmitted from the DALI control gear to the DALI bus;
a reception control module coupled to both the DALI bus and the DALI control gear, the reception control module configured to pass a dimming signal from the DALI bus on to the DALI control gear;
a push-button dimming control module coupled to each of the DALI bus, the transmission control module and the reception control module, the push-button dimming control module configured to, in a push-button dimming mode, detect a voltage on the DALI bus, turn off the transmission control module and the reception control module when detecting that the voltage on the DALI bus rises beyond an internal reference voltage, and turn on the reception control module when detecting that the voltage on the DALI bus drops below the internal reference voltage, thereby enabling the dimming signal to be transmitted from the DALI bus to the DALI control gear through the reception control module; and
a first power supply module coupled to each of an energy-storage capacitor, the DALI bus, the transmission control module, the reception control module and the push-button dimming control module, the first power supply module configured to, when a high level is present on the DALI bus, charge the energy-storage capacitor and provide reference voltages respectively to the transmission control module, the reception control module and the push-button dimming control module.

Optionally, the first power supply module may include a power transistor switch and a bandgap reference voltage source, the power transistor switch has one end coupled to the DALI bus and the other end coupled to both the bandgap reference voltage source and the energy-storage capacitor, the energy-storage capacitor is charged when the power transistor switch is turned on and a high level is present on the DALI bus, the bandgap reference voltage source configured to provide the reference voltages respectively to the transmission control module, the reception control module and the push-button dimming control module.

Optionally, the transmission control module may include a first MOS transistor and a first operational amplifier, the first MOS transistor having a gate coupled to an output terminal of the first operational amplifier, the first MOS transistor having a drain coupled to the DALI bus, the first MOS transistor having a source coupled to both a second input terminal of the first operational amplifier and a first end of a first current-limiting resistor, the first current-limiting resistor having a grounded second end, the first operational amplifier having a first input terminal coupled to the bandgap reference voltage source and configured to receive a first reference voltage, the first operational amplifier having an enable terminal coupled to both the DALI control gear and the push-button dimming control module.

Optionally, the transmission control module may be coupled to the DALI bus through a second constant-current source including a second MOS transistor connected in series to the first MOS transistor.

Optionally, the transmission control module may be coupled to the DALI control gear through a first optocoupler.

Optionally, the reception control module may include a third MOS transistor and a second operational amplifier, the third MOS transistor having a gate coupled to an output terminal of the second operational amplifier, the third MOS transistor having a drain coupled to both the DALI bus and the DALI control gear, the third MOS transistor having a source coupled to both a second input terminal of the second operational amplifier and a first end of a second current-limiting resistor, the second current-limiting resistor having a grounded second end, the second operational amplifier having a first input terminal coupled to the bandgap reference voltage source and configured to receive a second reference voltage, the second operational amplifier having an enable terminal coupled to the push-button dimming control module.

Optionally, the reception control module may be coupled to both the DALI control gear and the DALI bus through a second optocoupler.

Optionally, the second optocoupler may be coupled to the DALI bus through a first constant-current source including a fourth MOS transistor connected in series to the third MOS transistor.

Optionally, the push-button dimming control module may include an overvoltage protection circuit, the overvoltage protection circuit having a first input terminal coupled to the DALI bus and configured to receive the voltage on the DALI bus, the overvoltage protection circuit having a second input terminal coupled to the bandgap reference voltage source and configured to receive the internal reference voltage, the overvoltage protection circuit having an output terminal coupled to both the transmission control module and the reception control module, wherein when the voltage rises beyond the internal reference voltage, the transmission control module and the reception control module are turned off; and when the voltage drops below the internal reference voltage, the reception control module is turned on.

Optionally, the dimming interface control circuit may be integrated into a chip having:
a signal input pin coupled to the reception control module, the DALI bus and the DALI control gear;
a signal output pin coupled to the transmission control module and the DALI control gear;
a push-button dimming control pin coupled to the DALI bus and the push-button dimming control module;
a high voltage pin coupled to the DALI bus and the first power supply module;
a power supply pin coupled to the energy-storage capacitor and the first power supply module;
a sampling pin coupled to first current-limiting resistor and the transmission control module;
a drain pin coupled to the DALI bus and the transmission control module; and
a ground pin, which is grounded.

Optionally, the push-button dimming control pin may be coupled to one end of a first voltage-dividing resistor and one end of a second voltage-dividing resistor, with the other end of the first voltage-dividing resistor being coupled to the DALI bus and the other end of the second voltage-dividing resistor being grounded.

Based on the same inventive concept, the present invention also provides a dimming system including: a digital addressable lighting interface (DALI) bus; at least one DALI control gear; and for each DALI control gear, a dimming interface control circuit compatible with multiple dimming modes as defined above, which is coupled to both the DALI bus and the specific DALI control gear.

Optionally, the dimming system may further include a DALI host coupled to the DALI bus.

Optionally, the dimming system may further include a push-button switch, one end of which is coupled to the DALI bus, and the other end of which is coupled to a live line of an AC power supply.

Optionally, the dimming system may further include a rectification circuit coupled between the DALI bus and the dimming interface control circuit.

Compared with the prior art, the present invention has at least one of the following advantages:
1. The dimming interface control circuit compatible with multiple dimming modes is coupled to the DALI bus and the DALI control gear. The dimming interface control circuit includes the first power supply module, the transmission control module, the reception control module and the push-button dimming control module. The dimming interface control circuit is compatible to both DALI dimming and push-button dimming modes.
2. Associated peripheral circuitry can be simplified to be more consistent, more generally applicable and include fewer peripheral components, compared to existing interface circuits consisting of standalone components.
3. The signal path(s) in the transmission control module and/or reception control module may be switched on and off using MOS transistor(s), resulting in higher accuracy, less susceptibility to temperature drifts and better consistency.
4. Additional constant-current source(s) may be connected in series between the transmission control module and/or reception control module and the DALI bus, and the provision of a constant current and current limitation may be accomplished by MOS transistor(s) in the constant-current source(s). This results in higher accuracy, less susceptibility to temperature drifts and increased surge immunity of the circuit.
5. Apart from transmission of a push-button dimming signal, the overvoltage protection circuit integrated in the push-button dimming control module imparts overvoltage protection ability to the chip, which enables the chip to meet the need of high voltage in push-button dimming.

### BRIEF DESCRIPTION OF THE DRAWINGS

Those of ordinary skill in the art will appreciate that the following drawings are presented merely to enable a better understanding of the present invention rather than to limit the scope thereof in any sense. In the drawings:
Fig. 1 is a schematic architecture diagram of a dimming interface control circuit compatible with multiple dimming modes according to a first embodiment of the present invention;
Fig. 2 is a schematic architecture diagram of a dimming system according to the first embodiment of the present invention;
Fig. 3 schematically illustrates a wiring scheme of the dimming system of Fig. 2 for a DALI dimming mode;
Fig. 4 schematically illustrates a wiring scheme of the dimming system of Fig. 2 for a push-button dimming mode;
Fig. 5 is a schematic architecture diagram of a dimming system according to a second embodiment of the present invention;
Fig. 6 is a schematic architecture diagram of an internal circuit of a constant-current source in the dimming system of Fig. 5; and
Fig. 7 is another exemplary schematic architecture diagram of the dimming system according to the second embodiment of the present invention.

### DETAILED DESCRIPTION

The following description sets forth numerous specific details in order to provide a more thorough understanding of the present invention. However, it will be apparent to those skilled in the art that the present invention can be practiced without one or more of these specific details. In other instances, well-known technical features have not been described in order to avoid unnecessary obscuring of the invention. It is to be understood that the invention may be embodied in many different forms and should not be construed as being limited to the embodiments set forth below. Rather, these embodiments are provided so that this disclosure is thorough and conveys the scope of the invention to those skilled in the art. In the drawings, like reference numerals refer to like elements throughout. It will be understood that when an element is referred to as being "connected to" or "coupled to" another element, it can be directly connected or coupled to the other element, or intervening elements may also be present. In contrast, when an element is referred to as being "directly connected to" another element, there are no intervening elements. As used herein, the singular forms "a", "an" and "the" are intended to include the plural forms as well, unless the context clearly indicates otherwise. It will be further understood that the term "comprising" specifies the presence of stated features, steps, operations, elements, and/or components, but do not preclude the presence or addition of one or more other features, steps, operations, elements, components, and/or groups thereof. As used herein, the term "and/or" includes any and all combinations of the associated listed items.

The present invention will be described in greater detail below with reference to the accompanying drawings and to specific embodiments. Advantages and features of the invention will become more apparent from the following description. Note that the figures are provided in a very simplified form not necessarily drawn to exact scale and for the only purpose of facilitating easy and clear description of the disclosed embodiments.

### Embodiment 1

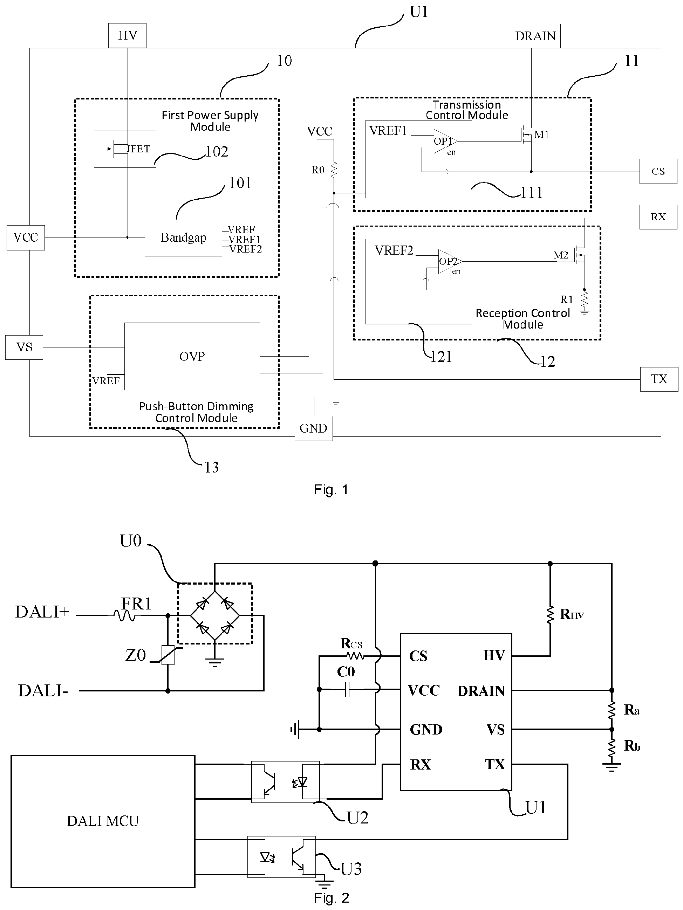

Referring to Figs. 1 and 2, in an embodiment of the present invention, there is provided a dimming interface control circuit U1 compatible with multiple dimming modes (referred to hereinafter as the "dimming interface control circuit U1" for short), which is coupled to a DALI bus DALI+ and DALI- and a DALI control gear DALI MCU and is configured to receive a power supply from the DALI bus DALI+ and enable signal communication between the DALI control gear DALI MCU and the DALI bus DALI+ and DALI-.

As an example, the dimming interface control circuit U1 may include a transmission control module 11, a reception control module 12, a push-button dimming control module 13 and a first power supply module 10.

The first power supply module 10 may be coupled to each of an energy-storage capacitor C0, the DALI bus DALI+ and DALI-, the transmission control module 11, the reception control module 12 and the push-button dimming control module 13. The first power supply module 10 is configured to charge the energy-storage capacitor C0 when the DALI bus DALI+ is at a high level, thereby providing reference voltages to circuit modules including the transmission control module 11, the reception control module 12 and the push-button dimming control module 13.

In this embodiment, in a DALI dimming mode, a square-wave signal is transmitted over the DALI bus DALI+. Moreover, on the DALI bus DALI+, a voltage of 9.5 V or higher is considered as a high level, and a voltage of 6.5 V or lower is considered as a low level. In a push-button dimming mode, a sinusoidal wave voltage at a mains frequency is provided on the DALI bus.

The first power supply module 10 may be implemented by any suitable circuit design. For example, referring to Figs. 1 and 2, the first power supply module 10 may include a power transistor switch 102 and a bandgap reference voltage source 101. One terminal of the power transistor switch 102 may be coupled to the DALI bus DALI+ through a current-limiting resistor R_{HV}, and another terminal of the power transistor switch 102 may be coupled to the energy-storage capacitor C0 and the bandgap reference voltage source 101. The bandgap reference voltage source 101 may be based on a voltage on the energy-storage capacitor (i.e., a voltage present at a power supply pin VCC) to produce reference voltages such as a first reference voltage VREF1, a second reference voltage VREF2 and an internal reference voltage VREF, which are selectively produced to the transmission control module 11, the reception control module 12, the push-button dimming control module 13 or the like.

The transmission control module 11 may be coupled to both the DALI control gear DALI MCU and the DALI bus DALI+. The transmission control module 11 is configured to convert a signal from the DALI control gear DALI MCU to a DALI signal and feed the DALI signal to the DALI bus DALI+. The DALI signal may indicate brightness or other information of a currently active luminaire in the DALI dimming mode.

The transmission control module 11 may be implemented by any suitable circuit design. As an example, the transmission control module 11 may include a first MOS transistor M1 and a first operational amplifier OP1 111. A gate of the first MOS transistor M1 may be coupled to an output terminal of the first operational amplifier OP1, and a drain DRAIN of the first MOS transistor M1 may be coupled to the DALI bus DALI+. A source of the first MOS transistor M1 may be coupled to a second input terminal of the first operational amplifier OP1 and one end of the first current-limiting resistor Res. The other end of the first current-limiting resistor Rcs may be grounded. A first input terminal of the first operational amplifier OP1 may be coupled to the bandgap reference voltage source 101 to receive the first reference voltage VREF1 from the bandgap reference voltage source 101. In this way, the first operational amplifier OP1 can amplify the difference between a voltage present at the end of the first current-limiting resistor Rcs (indicating the magnitude of a pull-down current set by the first current-limiting resistor Rcs) and the first reference voltage VREF1 and control an on-resistance of the first MOS transistor M1 based on a result of the amplification. Both the DALI control gear DALI MCU and the push-button dimming control module 13 may be coupled to an enable terminal of the first operational amplifier OP1. The signal from the DALI control gear DALI MCU may assume either a high or low level, and the enable terminal of the first operational amplifier OP1 may receive a PWM signal. The first operational amplifier OP1 may be enabled depending on the PWM signal. Once the first operational amplifier OP1 is enabled by the PWM signal, it may turn on or off the first MOS transistor M1 according to the high or low level of the signal from the DALI control gear DALI MCU. Specifically, when the signal from the DALI control gear DALI MCU is at the high level, the first MOS transistor M1 may be turned on, pulling down a voltage at the drain DRAIN thereof. When the signal from the DALI control gear DALI MCU is at the low level, the first MOS transistor M1 may be turned off, pulling up the voltage at the drain DRAIN thereof to a high level. In this way, the voltage on the DALI bus DALI+ may be varied. That is, the DALI control gear DALI MCU may feed signals to the DALI bus.

Switching the signal path in the transmission control module 11 using the first MOS transistor M1 can provide high accuracy, low susceptibility to temperature drifts and better consistency.

Optionally, referring to Figs, 1 and 2, the transmission control module 11 may be coupled to the DALI control gear DALI MCU through a first optocoupler U3. Specifically, the transmission control module 11 may be coupled to one end of an optoreceiver in the first optocoupler U3, and the other end of the optoreceiver may be grounded. Both ends of an optotransmitter in the first optocoupler U3 may be coupled to the DALI control gear DALI MCU. In this way, the transmission control module 11 may be coupled to the DALI control gear DALI MCU. The dimming interface control circuit may further include a resistor R0. One end of the resistor R0 may be coupled to the energy-storage capacitor C0, and the other end of the resistor R0 may be coupled to the end of the optoreceiver in the first optocoupler U3. In this way, the dimming interface control circuit U1 may receive a signal from the DALI control gear DALI MCU through the first optocoupler U3 (not shown), convert it into a DALI signal and feed the DALI signal to the DALI bus DALI+. The first optocoupler U3 may be configured to provide signal isolation required by the dimming interface control circuit U1 to feed the signal from the DALI control gear DALI MCU to the DALI bus DALI+.

The reception control module 12 may be coupled to both the DALI control gear DALI MCU and the DALI bus DALI+ and DALI-. The reception control module 12 is configured to pass, in the DALI dimming mode, a dimming signal from the DALI bus DALI+ and DALI- on to the DALI control gear DALI MCU. Examples of the dimming signal may include a DALI dimming signal and a push-button dimming signal.

The reception control module 12 may be implemented by any suitable circuit design. As an example, the reception control module 12 may include a third MOS transistor M2 and a comparison module 121 incorporating a second operational amplifier OP2. A gate of the third MOS transistor M2 may be coupled to an output terminal of the second operational amplifier OP2, and a drain of the third MOS transistor M2 may be coupled to the DALI bus DALI+. A source of the third MOS transistor M2 may be coupled to a second input terminal of the second operational amplifier OP2 and one end of a second current-limiting resistor R1, and the other end of the second current-limiting resistor R1 may be grounded. A first input terminal of the second operational amplifier OP2 may be coupled to a second reference voltage VREF2 output from the bandgap reference voltage source 101, and an enable terminal of the second operational amplifier OP2 may be coupled to the push-button dimming control module 13. With this arrangement, the second operational amplifier OP2 can compare a voltage at the end of the second current-limiting resistor R1 with the second reference voltage VREF2 and control operation of the third MOS transistor M2 based on a result of the comparison. For example, the third MOS transistor M2 may be controlled to operate in a weak on-state in which the second operational amplifier OP2, the third MOS transistor M2 and the second current-limiting resistor R1 make up a constant-current source enabling the DALI dimming signal from the DALI bus DALI+ to be converted into a signal consisting of high and low levels that can be identified by the DALI control gear DALI MCU to accomplish DALI dimming.

Switching the signal path in the reception control module 12 using the third MOS transistor M2 can provide high accuracy, low susceptibility to temperature drifts and better consistency.

Optionally, the reception control module 12 may be coupled to both the DALI control gear DALI MCU and the DALI bus DALI+ through a second optocoupler U2. Specifically, the reception control module 12 may be coupled to one end of an optotransmitter in the second optocoupler U2, and the other end of the optotransmitter may be coupled to the DALI bus DALI+ (i.e., an output terminal of a rectification circuit U0). Both ends of an optoreceiver in the second optocoupler U2 may be coupled to the DALI control gear DALI MCU. With this arrangement, when the second optocoupler U2 is turned on, the reception control module 12 in the dimming interface control circuit U1 may receive a DALI dimming signal from the DALI bus, covert the received DALI dimming signal into a signal acceptable to the DALI control gear DALI MCU and transmit it to the DALI control gear DALI MCU to accomplish DALI dimming. The second optocoupler U2 may be configured to provide signal isolation required by the dimming interface control circuit U1 to receive the DALI dimming signal from the DALI bus DALI+ and DALI- and transmit the received DALI dimming signal to the DALI control gear DALI MCU.

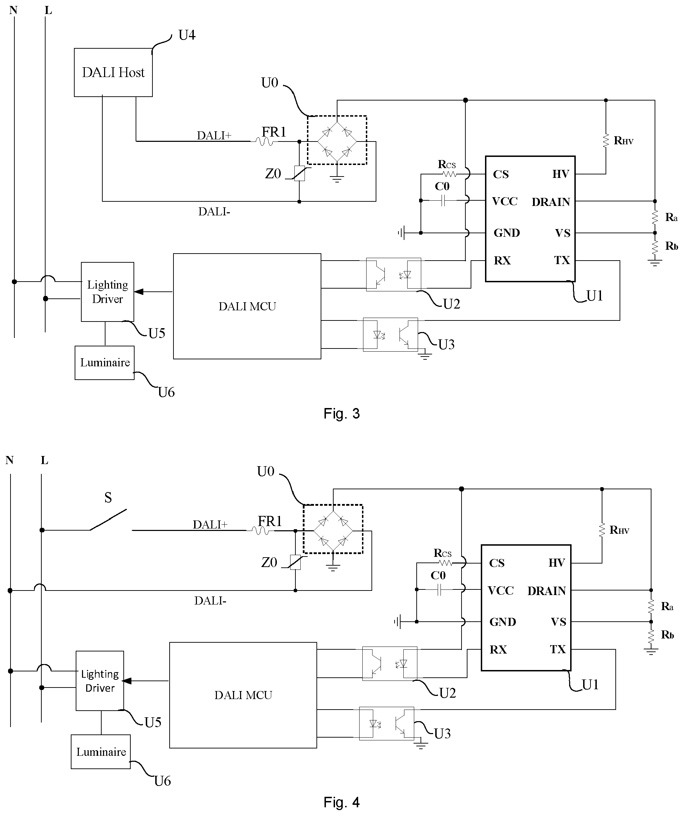

The push-button dimming control module 13 may be coupled to each of the first power supply module 10, the transmission control module 11, the reception control module 12 and the DALI bus DALI+. In the push-button dimming mode, with combined reference to Figs. 1 and 4, a push-button switch S may be closed, connecting the DALI bus DALI+ to a live line L of an AC power supply. As a result, the voltage on the DALI bus DALI+ may surge and be transformed into a sinusoidal wave at a mains frequency. The push-button dimming control module 13 may detect the voltage on the DALI bus DALI+ and determine whether it rises beyond the internal reference voltage VREF provided by the first power supply module 10. If the determination is positive, both the first MOS transistor M1 in the transmission control module 11 and the third MOS transistor M2 in the reception control module 12 may be turned off. When it is determined that the voltage on the DALI bus DALI+ drops below the internal reference voltage VREF, the third MOS transistor M2 in the reception control module 12 may be turned on, enabling a push-button dimming signal (e.g., a PWM signal) from the DALI bus DALI+ to pass through the reception control module 12 and the second optocoupler U2 on to the DALI control gear DALI MCU to accomplish push-button dimming. It is to be noted that, when it is determined that the voltage on the DALI bus DALI+ drops below the internal reference voltage VREF, the push-button dimming control module 13 may enable the transmission control module 11 but may not turn on the first MOS transistor M1, and whether the first MOS transistor M1 is to be turned on may be determined by the DALI control gear DALI MCU. It would be appreciated that, in the push-button dimming mode, an electrical level at a signal input pin RX may rise high upon the voltage on the DALI bus DALI+ exceeding VREF and drop low otherwise, thereby delivering the push-button dimming signal to the DALI control gear DALI MCU in the form of a PWM signal. The DALI control gear DALI MCU may distinguish the push-button dimming signal in the push-button dimming mode from the DALI dimming signal in the DALI dimming mode and use it to control a lighting driver (denoted as "U5" in Fig. 4) to accomplish push-button dimming.

The push-button dimming control module 13 may be implemented by any suitable circuit design. As an example, the push-button dimming control module 13 may include an overvoltage protection circuit OVP. A first input terminal of the overvoltage protection circuit OVP may be coupled to the DALI bus DALI+, and a second input terminal of the overvoltage protection circuit OVP may be coupled to the bandgap reference voltage source 101 in order to receive the internal reference voltage VREF. An output terminal of the overvoltage protection circuit OVP may be coupled to both the enable terminal ("en") of the first operational amplifier OP1 and the enable terminal ("en") of the second operational amplifier OP2. Moreover, in the push-button dimming mode, with reference to Figs. 1 and 4, after the push-button switch S is closed, when the overvoltage protection circuit OVP detects that the voltage on the DALI bus DALI+ rises beyond the internal reference voltage VREF, the first operational amplifier OP1 and the second operational amplifier OP2 may both not be enabled, i.e., the first operational amplifier OP1 and the second operational amplifier OP2 may be both disabled. As a result, both the first MOS transistor M1 in the transmission control module 11 and the third MOS transistor M2 in the reception control module 12 may be turned off, since no signal is received from the first operational amplifier OP1 and the second operational amplifier OP2. Additionally, when the voltage on the DALI bus DALI+ drops below the internal reference voltage VREF, both the first operational amplifier OP1 and the second operational amplifier OP2 may be enabled. As a result, the third MOS transistor M2 in the reception control module 12 may be turned on by a signal output from the second operational amplifier OP2, enabling the push-button dimming signal to be transferred from the DALI bus DALI+ to the DALI control gear DALI MCU.

In addition to overvoltage protection, the overvoltage protection circuit OVP in the push-button dimming control module 13 enables transmission of the push-button dimming signal and meets the need of high voltage in the push-button dimming mode. Moreover, it has the advantages of high accuracy and low susceptibility to temperature drifts.

Operation of the dimming interface control circuit U1 in this embodiment will be described below with reference to Figs. 1 to 4. During dimming, the third MOS transistor M2 in the reception control module 12 always operates in a weak on-state, in which it makes up a constant-current with current-limiting capacity together with the second operational amplifier OP2. The DALI control gear DALI MCU processes a dimming signal received from the second optocoupler U2 (which may be either a DALI dimming signal or a push-button dimming signal) and accordingly controls an output of a lighting driver coupled thereto (e.g., an LED driver) U5, thereby accomplishing dimming of a luminaire U6. Additionally, the DALI control gear DALI MCU feeds information on the current brightness or other conditions of the luminaire U6 (optionally, by sending a signal indicative of the information) back to the transmission control module 11 through the first optocoupler U3. The transmission control module 11 feeds the information on the current conditions of the luminaire U6 further to the DALI bus DALI+, and a DALI host (not shown) decides, based on the information of the luminaire U6 received from the DALI bus DALI+, whether to increase or decrease the brightness of the luminaire U6 subsequently. Based on the decision, the DALI host alters a duty cycle of the voltage on the DALI bus DALI+, and the reception control module 13 passes the new dimming information on to the DALI control gear DALI MCU, leading to a change in the dimming signal received by the DALI control gear DALI MCU from the second optocoupler U2. Accordingly, the output of the lighting driver (e.g., an LED driver) U5 is controlled to accomplish re-dimming of the luminaire U6. This process can be repeated so that the voltage on the DALI bus DALI+ is a varying square-wave signal incorporating both the dimming signal and the current brightness information of the luminaire U6 fed back from the DALI control gear DALI MCU.

Optionally, the dimming interface control circuit U1 in the embodiment may be connected to the DALI bus DALI+ and DALI- through a rectification circuit U0. The rectification circuit U0 may serve principally to allow the connection with the DALI bus DALI+ and DALI- to be accomplished without considering the polarity thereof. This can facilitate subsequent wiring. Thus, the rectification circuit U0 is intended to prevent reverse connection.

Optionally, between the rectification circuit U0 and the DALI bus DALI+ and DALI- may be connected a current-limiting protector FR1 for limiting a current of a signal communicated therebetween and a varistor Z0 for clamping the voltage on the DALI bus DALI+ and DALI-.

Further, in order to simplify peripheral circuitry for the dimming interface control circuit and increase its consistency and general applicability, in this embodiment, the dimming interface control circuit U1 may be integrated into a single chip (i.e., interface chip) with a signal input pin RX, a signal output pin TX, a push-button dimming control pin VS, a high voltage pin HV, a power supply pin VCC, a sampling pin CS, a ground pin GND and a drain pin DRAIN. Both the second optocoupler U2 and the first optocoupler U3 may be disposed outside the chip.

The signal output pin TX may be coupled to the transmission control module 11 and one end of the optoreceiver in the first optocoupler U3, enabling high and low levels at the signal output pin TX (depending on the signal from the DALI control gear DALI MCU that indicates information on the current conditions of the luminaire, or the like) to be converted into high and low voltages at the drain pin DRAIN, which contribute to variation of the voltage on the DALI bus DALI+. In this way, signal feeding (i.e., information feedback) from the DALI control gear DALI MCU to the DALI bus DALI+ can be achieved.

The signal input pin RX may be coupled to the reception control module 12 and one end of the optotransmitter in the second optocoupler U2. In this way, when the second optocoupler U2 is turned on, the reception control module 12 in the dimming interface control circuit U1 may receive a dimming signal from the DALI bus DALI+ and DALI- (which may be either a DALI dimming signal or a push-button dimming signal) and covert the received dimming signal into a signal acceptable to the DALI control gear DALI MCU, which may be then fed to the DALI control gear DALI MCU.

The push-button dimming control pin VS may be coupled to one end of a first voltage-dividing resistor Ra and one end of a second voltage-dividing resistor Rb. Both voltage-dividing resistors may be provided outside the chip. The other end of the first voltage-dividing resistor Ra may be coupled to an output terminal of the rectification circuit U0, and the other end of the second voltage-dividing resistor Rb may be grounded. In this way, the push-button dimming control pin VS is connected to the DALI bus DALI+ and DALI-. In the push-button dimming mode, the push-button switch S may be closed, connecting the DALI bus DALI+ to a live line of an AC power supply ("L" in Fig. 4). As a result, the voltage on the DALI bus DALI+ may surge and be transformed into a sinusoidal wave at a mains frequency. The push-button dimming control module 13 may detect the voltage on the DALI bus DALI+ through the push-button dimming control pin VS, and when detecting that the voltage on the DALI bus DALI+ rises beyond the internal reference voltage VREF, may disable both the first operational amplifier OP1 in the transmission control module 11 and the second operational amplifier OP2 in the reception control module 12, thereby turning off the first MOS transistor M1 in the transmission control module 11 and the third MOS transistor M2 in the reception control module 12 and causing a high level to be present at the signal input pin RX. Moreover, when detecting that the voltage on the DALI bus DALI+ drops below the internal reference voltage, the push-button dimming control module 13 may enable the first operational amplifier OP1 in the transmission control module 11 and the second operational amplifier OP2 in the reception control module 12, thereby turning on the third MOS transistor M2 in the reception control module 12 and causing a low level to be present at the signal input pin RX. In this way, the signal input pin RX can deliver a push-button dimming signal from the DALI bus DALI+ as a PWM signal to the DALI control gear DALI MCU through the reception control module 12.

The drain pin DRAIN may be coupled to the DALI bus DALI+, and may be coupled to the signal output pin TX through the transmission control module 11. In this way, a signal received at the signal output pin TX may be transmitted to the DALI bus DALI+.

The power supply pin VCC may be coupled to one end of the energy-storage capacitor C0 that is disposed outside the chip, and the other end of the energy-storage capacitor C0 may be grounded. The high voltage pin HV may be coupled to one end of the current-limiting resistor R_{HV} that is also disposed outside the chip, and the other end of the current-limiting resistor R_{HV} may be coupled to a terminal of the rectification circuit U0. In this way, the high voltage pin HV is connected to the DALI bus DALI+ and DALI-. When the voltage on the DALI bus DALI+ is at a high level, the dimming interface control circuit U1 may receive electrical power from the DALI bus DALI+ via the high voltage pin HV, and may charge the energy-storage capacitor C0 via the power supply pin VCC with the received electrical power, thereby providing reference voltages to an internal circuit in the dimming interface control circuit chip U1.

The sampling pin CS may be coupled to one of the first current-limiting resistor Rcs that is disposed outside the chip, and the other end of the first current-limiting resistor Rcs may be grounded. Once the first optocoupler U3 is turned on, a maximum pull-down current for the transmission control module 11 may be determined by the first current-limiting resistor Res, and may be turned on or off depending on a high or low level at the signal output pin TX. In this way, under the action of the signal output pin TX, the pull-down current of the transmission control module 11 may be turned on when the first optocoupler U3 is turned on and turned off when the first optocoupler U3 is turned off. The transmission control module 11 may act to transmit an output signal from the DALI control gear DALI MCU to the DALI bus DALI+.

The ground pin GND may be coupled to a ground terminal of the chip, the energy-storage capacitor C0 and the first current-limiting resistor Rcs. In this way, the chip may be commonly grounded with the peripheral circuitry thereof.

While the resistor, capacitor and other components have been described above as being disposed outside the dimming interface control circuit chip U1, the present invention is not so limited, as they may also be integrated within the chip as long as an area of the chip allows doing so.

Referring to Figs. 1 to 4, in this embodiment, there is also provided a dimming system including: a DALI bus DALI+ and DALI-; at least one DALI control gear DALI MCU; and for each DALI control gear DALI MCU, a dimming interface control circuit U1, a second optocoupler U2, a first optocoupler U3 and a rectification circuit U0, as defined above.

The dimming interface control circuit U1 is coupled to the DALI bus DALI+ and DALI- through the rectification circuit U0. The dimming interface control circuit U1 is coupled to the DALI control gear DALI MCU through the second optocoupler U2 and the first optocoupler U3.

As an example, referring to Fig. 3, the dimming system in this embodiment may be used for DALI dimming. In this case, the dimming system may further include a DALI host U4, a lighting driver U5 and a luminaire U6. The lighting driver U5 may be coupled to live L and neutral N lines of an AC power supply, the DALI control gear DALI MCU and the luminaire U6. The DALI control gear DALI MCU may receive a dimming signal generated by the DALI host U4 from the DALI bus DALI+ and DALI- through the second optocoupler U2 and the dimming interface control circuit U1, produce a corresponding control signal and feed the control signal to the lighting driver U5, enabling the lighting driver U5 to drive the luminaire 16 to change its brightness, color temperature or the like. Moreover, the DALI control gear DALI MCU may feed information about the current conditions of the luminaire 16 (including brightness, color temperature, etc.) to the DALI bus DALI+ through the first optocoupler U3 and the dimming interface control circuit U1. This information may be received by a power supply of the DALI bus, and the DALI host U4 may responsively produce, based on the information on the current conditions of the luminaire 16 (including brightness, color temperature, etc.), a dimming signal indicating a subsequent dimming action for adjusting the brightness, color temperature or the like of the luminaire U6.

As another example, referring to Fig. 4, the dimming system in this embodiment may also be used for push-button dimming. In this case, the dimming system may further include a push-button switch S, a lighting driver U5 and a luminaire U6. The lighting driver U5 may be coupled to live L and neutral N lines of an AC power supply, the DALI control gear DALI MCU and the luminaire U6. One end of the push-button switch S may be coupled to the live line L of the AC power supply, and the other end may be coupled to the DALI bus DALI+. When in need of push-button dimming, the push-button switch S may be closed, connecting the DALI bus DALI+ to the live line L of the AC power supply. As a result, the DALI control gear DALI MCU may receive a push-button dimming signal from the DALI bus DALI+ through the second optocoupler U2 and the dimming interface control circuit U1, produce a corresponding control signal and feed the control signal to the lighting driver U5, thereby enabling the lighting driver U5 to drive the luminaire U6 to change its brightness, color temperature or the like.

Since the dimming interface control circuit of the present invention is compatible with the multiple dimming modes, the dimming system in this embodiment that incorporates the dimming interface control circuit is also compatible with the DALI dimming and push-button dimming modes and thus has improved performance.

### Embodiment 2

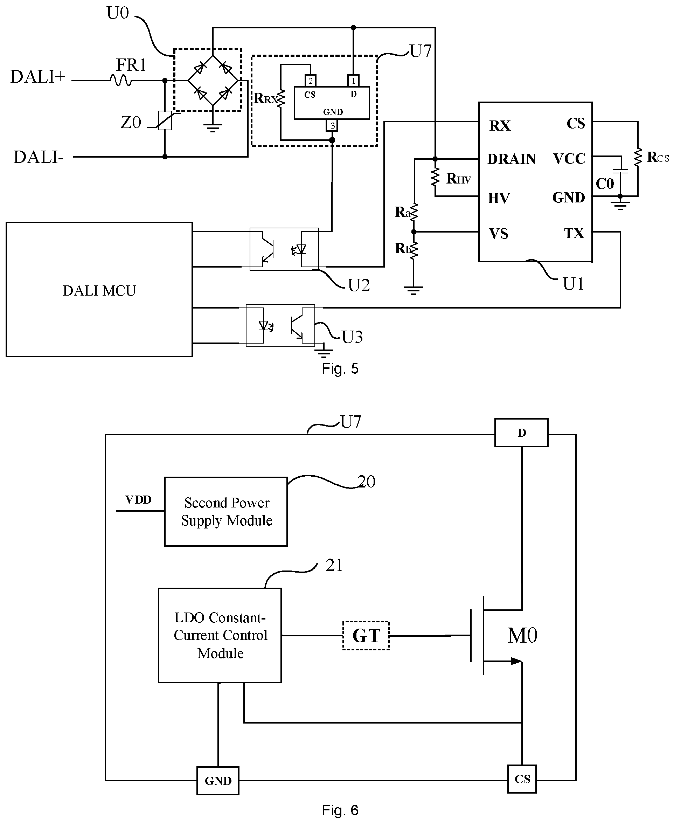

Referring to Figs. 5 to 7, in one embodiment of the present invention, there are provided a dimming interface control circuit U1 compatible with multiple dimming modes (referred to hereinafter as the "dimming interface control circuit U1" for short) and a dimming system. The dimming interface control circuit U1 has the same circuit design and pin design as the dimming interface control circuit U1 of Embodiment 1, except that for increased surge immunity of the dimming interface control circuit U1, in the dimming interface control circuit U1 of this embodiment, an additional first constant-current source U7 is connected in series between the reception control module 12 and the DALI bus DALI+ (i.e., the first constant-current source U7 is additionally connected in series between the second optocoupler U2 and the DALI bus), and/or an additional second constant-current source U8 is connected in series between the transmission control module 11 and the DALI bus DALI+ (i.e., the second constant-current source U8 is additionally connected in series to the drain pin DRAIN).

As an example, referring to Figs. 5 and 6, in this embodiment, increased surge immunity can be achieved by connecting an additional first constant-current source U7 in series to the signal input pin RX of the dimming interface control circuit U1. The first constant-current source U7 may be implemented as an ordinary constant-current source chip having 1 to 3 external pins and including a second power supply module 20, an LDO constant-current control module 21 and a MOS transistor M0 as internal components. An input terminal of the second power supply module 20 may be coupled to an appropriate power supply voltage VDD, and an output terminal thereof may be coupled to a drain (D) of the MOS transistor M0 and a pin 1. The pin 1 may be coupled to the DALI bus connected to an output terminal of a rectification circuit U0, and the second power supply module 20 may be configured to receive electrical power from the DALI bus and thereby provide a corresponding drain voltage at the drain D of the MOS transistor M0. An input terminal of the LDO constant-current control module 21 may be grounded, and another input terminal may be coupled to a source (CS) of the MOS transistor M0 and a pin 2. An output terminal of the LDO constant-current control module 21 may be connected directly, or via a gate resistor GT, to a gate of the MOS transistor M0 in order to turn on or off the MOS transistor M0. The pin 2 may be additionally coupled to one end of an external resistor R_{RX}, and a pin 3 may be coupled to the other end of the resistor R_{RX} and one end of the optotransmitter in the second optocoupler U2. With this arrangement, the signal input pin RX of the dimming interface control circuit U1 compatible with multiple dimming modes is coupled to the first constant-current source U7 through the second optocoupler U2 and the pin 3. Moreover, with combined reference to Fig. 2, the MOS transistor M2 in the reception control module 12 of the dimming interface control circuit U1 is connected in series to the MOS transistor M0 in the first constant-current source U7.

Referring to Figs. 1 to 6, in the event of a surge voltage, the overvoltage protection circuit OVP in the push-button dimming control module 13 of the dimming interface control circuit U1 may turn off the MOS transistors M1 and M2 in the dimming interface control circuit U1. Moreover, the MOS transistor M0 of the first constant-current source U7 connected in series to the RX pin can take a fraction of the surge voltage, reducing the risks of breakdown of the MOS transistor M2 that may lead to failure of the dimming interface control circuit U1 and hence increasing its surge immunity.

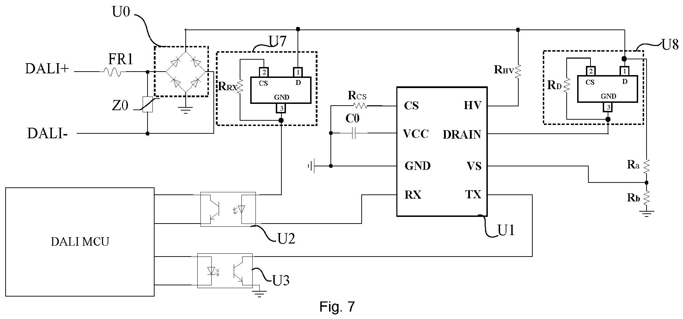

As another example, referring to Fig. 7, in this embodiment, for maximized surge immunity, an additional first constant-current source U7 may be connected in series to the signal input pin RX of the dimming interface control circuit U1 and an additional second constant-current source U8 may be connected in series to the drain pin DRAIN. The first constant-current source U7 may include a MOS transistor, and the second constant-current source U8 may include a MOS transistor. The first constant-current source U7 may also have pins 1 to 3, which may have the same functions as respective pins 1 to 3 of the second constant-current source U8. Both pins 1 of the first constant-current source U7 and the second constant-current source U8 may be coupled to the DALI bus in order to receive electrical power from the DALI bus and thereby provide a corresponding drain voltage at a drain D of the MOS transistor M0. The pin 2 of the first constant-current source U7 may be coupled to a source of the MOS transistor M0 in the first constant-current source U7 and one end of a resistor R_{RX} outside the first constant-current source U7, and the pin 3 may be coupled to the other end of the resistor R_{RX} and one end of the optotransmitter in the second optocoupler U2. In this way, the signal input pin RX of the dimming interface control circuit U1 is coupled to the pin 3 of the first constant-current source U7 through the second optocoupler U2. With combined reference to Figs. 1 and 7, M2 in the reception control module 12 of the dimming interface control circuit U1 may be connected in series to the MOS transistor M0 in the second constant-current source U8. The pin 1 of the second constant-current source U8 may be coupled to an output terminal of a rectification circuit U0 and one end of a voltage-dividing resistor Ra, and the pin 2 of the second constant-current source U8 may be coupled to a source of the MOS transistor M0 in the second constant-current source U8 and one end of a resistor R_{D} outside the second constant-current source U8. The pin 3 may be coupled to the other end of the resistor R_{D} and the drain pin DRAIN of the dimming interface control circuit U1. In this way, the drain pin DRAIN of the dimming interface control circuit U1 is coupled to the pin 3 of the second constant-current source U8. Further, with combined reference to Figs. 1 and 7, the MOS transistor M1 in the transmission control module 11 of the dimming interface control circuit U1 may be connected in series to the MOS transistor M0 in the second constant-current source U8.

With combined reference to Figs. 1, 6 and 7, in the event of a surge voltage, the overvoltage protection circuit OVP in the push-button dimming control module 13 of the dimming interface control circuit U1 may turn off the MOS transistors M1 and M2 in the dimming interface control circuit U1. Moreover, both the MOS transistor of the first constant-current source U7 connected in series to the RX pin and the MOS transistor of the second constant-current source U8 connected in series to the DRAIN pin can take fractions of the surge voltage, reducing the risks of breakdown of the MOS transistor M2 that may lead to failure of the dimming interface control circuit U1 and hence increasing its surge immunity.

It would be appreciated that, without departing from the scope of the present invention, the above-described first constant-current source U7 and second constant-current source U8 may have either the same internal circuit design or different internal circuit designs.

In other examples of this embodiment, the first constant-current source U7 may be omitted, and the second constant-current source U8 coupled to the DRAIN pin of the dimming interface control circuit U1 can still increase to some extent the surge immunity.

In further examples of this embodiment, the circuits of the first constant-current source U7 and the second constant-current source U8 may be at least partially arranged within the dimming interface control circuit U1. For example, the second MOS transistor in the first constant-current source U7 and the fourth MOS transistor in the second constant-current source U8 may be both arranged within the dimming interface control circuit U1. Alternatively, the first constant-current source U7 and the second constant-current source U8 may be both disposed outside of the dimming interface control circuit U1.

In other words, compared to the dimming system of Embodiment 1, the dimming system of this embodiment may further include the first constant-current source U7 connected to the signal input pin RX of the dimming interface control circuit U1 and/or the second constant-current source U8 connected to the drain pin DRAIN of the dimming interface control circuit U1, in addition to the DALI bus, the at least one DALI control gear, and the dimming interface control circuit(s) each for a respective one of the DALI control gear(s).

In addition to the advantages of Embodiment 1, the dimming interface control circuit and the dimming system compatible with multiple dimming modes in this embodiment further have the advantage of increased surge immunity.

The foregoing description presents merely preferred embodiments of the present invention and is not intended to limit the scope of the present invention in any way. Any and all changes and modifications made by those of ordinary skill in the art in light of the above teachings without departing from the spirit of the present invention are intended to be embraced in the scope as defined by the appended claims.

## Claims

1. A dimming interface control circuit (U1) compatible with multiple dimming modes, comprising:
a transmission control module (11) coupled to both a digital addressable lighting interface (DALI) bus and a DALI control gear, the transmission control module (11) configured to feed a signal transmitted from the DALI control gear to the DALI bus;
a reception control module (12) coupled to both the DALI bus and the DALI control gear, the reception control module (12) configured to pass a dimming signal from the DALI bus on to the DALI control gear;
a push-button dimming control module (13) coupled to each of the DALI bus, the transmission control module (11) and the reception control module (12), the push-button dimming control module (13) configured to, in a push-button dimming mode, detect a voltage on the DALI bus, turn off the transmission control module (11) and the reception control module (12) when detecting that the voltage on the DALI bus rises beyond an internal reference voltage, and turn on the reception control module (12) when detecting that the voltage on the DALI bus drops below the internal reference voltage, thereby enabling the dimming signal to be transmitted from the DALI bus to the DALI control gear through the reception control module (12); and
a first power supply module (10) coupled to each of an energy-storage capacitor (C0), the DALI bus, the transmission control module (11), the reception control module (12) and the push-button dimming control module (13), the first power supply module (10) configured to, when a high level is present on the DALI bus, charge the energy-storage capacitor (C0) and provide reference voltages respectively to the transmission control module (11), the reception control module (12) and the push-button dimming control module (13).

2. The dimming interface control circuit (U1) of claim 1, wherein the first power supply module (10) comprises a power transistor switch (102) and a bandgap reference voltage source (101), the power transistor switch (102) having one end coupled to the DALI bus and the other end coupled to both the bandgap reference voltage source (101) and the energy-storage capacitor (C0), the energy-storage capacitor (C0) is charged when the power transistor switch (102) is turned on and a high level is present on the DALI bus, the bandgap reference voltage source (101) configured to provide the reference voltages respectively to the transmission control module (11), the reception control module (12) and the push-button dimming control module (13).

3. The dimming interface control circuit (U1) of claim 2, wherein the transmission control module (11) comprises a first metal-oxide-semiconductor (MOS) transistor (M1) and a first operational amplifier (OP1), the first MOS transistor having a gate coupled to an output terminal of the first operational amplifier (OP1), the first MOS transistor (M1) having a drain coupled to the DALI bus, the first MOS transistor (M1) having a source coupled to both a second input terminal of the first operational amplifier (OP1) and a first end of a first current-limiting resistor (Rcs), the first current-limiting resistor (Rcs) having a grounded second end, the first operational amplifier (OP1) having a first input terminal coupled to the bandgap reference voltage source (101) and configured to receive a first reference voltage (VREF1), the first operational amplifier (OP1) having an enable terminal coupled to both the DALI control gear and the push-button dimming control module (13).

4. The dimming interface control circuit (U1) of claim 3, wherein the transmission control module (11) is coupled to the DALI bus through a second constant-current source (U8) comprising a second MOS transistor (M0), the second MOS transistor (M0) connected in series to the first MOS transistor (M1).

5. The dimming interface control circuit (U1) of claim 3, wherein the transmission control module (11) is coupled to the DALI control gear through a first optocoupler (U3).

6. The dimming interface control circuit (U1) of any one of claims 2 to 5, wherein the reception control module (12) comprises a third MOS transistor (M2) and a second operational amplifier (OP2), the third MOS transistor (M2) having a gate coupled to an output terminal of the second operational amplifier (OP2), the third MOS transistor (M2) having a drain coupled to both the DALI bus and the DALI control gear, the third MOS transistor (M2) having a source coupled to both a second input terminal of the second operational amplifier (OP2) and a first end of a second current-limiting resistor (R1), the second current-limiting resistor (R1) having a grounded second end, the second operational amplifier (OP2) having a first input terminal coupled to the bandgap reference voltage source (101) and configured to receive a second reference voltage, the second operational amplifier (OP2) having an enable terminal coupled to the push-button dimming control module (13).

7. The dimming interface control circuit (U1) of claim 6, wherein the reception control module (12) is coupled to both the DALI control gear and the DALI bus through a second optocoupler (U2).

8. The dimming interface control circuit (U1) of claim 7, wherein the second optocoupler (U2) is coupled to the DALI bus through a first constant-current source (U7) comprising a fourth MOS transistor (M0), the fourth MOS transistor (M0) connected in series to the third MOS transistor (M2).

9. The dimming interface control circuit (U1) of claim 2, wherein the push-button dimming control module (13) comprises an overvoltage protection circuit, the overvoltage protection circuit having a first input terminal coupled to the DALI bus and configured to receive the voltage on the DALI bus, the overvoltage protection circuit having a second input terminal coupled to the bandgap reference voltage source (101) and configured to receive the internal reference voltage, the overvoltage protection circuit having an output terminal coupled to both the transmission control module (11) and the reception control module (12), wherein when the voltage rises beyond the internal reference voltage, the transmission control module (11) and the reception control module (12) are turned off; and when the voltage drops below the internal reference voltage, the reception control module (12) is turned on.

10. The dimming interface control circuit (U1) of claim 1, the dimming interface control circuit being integrated into a chip having:
a signal input pin coupled to the reception control module (12), the DALI bus and the DALI control gear;
a signal output pin (TX) coupled to the transmission control module (11) and the DALI control gear;
a push-button dimming control pin (VS) coupled to the DALI bus and the push-button dimming control module (13);
a high voltage pin (HV) coupled to the DALI bus and the first power supply module (10);
a power supply pin (VCC) coupled to the energy-storage capacitor (C0) and the first power supply module (10);
a sampling pin (CS) coupled to first current-limiting resistor and the transmission control module (11);
a drain pin (DRAIN) coupled to the DALI bus and the transmission control module (11); and
a ground pin (GND), which is grounded.

11. The dimming interface control circuit (U1) of claim 10, wherein the push-button dimming control pin (VS) is coupled to one end of a first voltage-dividing resistor and one end of a second voltage-dividing resistor, the other end of the first voltage-dividing resistor is coupled to the DALI bus and the other end of the second voltage-dividing resistor is grounded.

12. A dimming system, comprising: a digital addressable lighting interface (DALI) bus; at least one DALI control gear; and for each DALI control gear, a dimming interface control circuit (U1) compatible with multiple dimming modes as defined in any one of claims 1 to 11, the dimming interface control circuit (U1) is coupled to both the DALI bus and the specific DALI control gear.

13. The dimming system of claim 12, further comprising a DALI host (U4) coupled to the DALI bus.

14. The dimming system of claim 12, further comprising a push-button switch (S), wherein the push-button switch (S) has one end coupled to the DALI bus and the other end coupled to a live line of an alternating current power supply.

15. The dimming system of claim 12, further comprising a rectification circuit (U0), wherein the rectification circuit (U0) is coupled between the DALI bus and the dimming interface control circuit (U1).
